# EUROPÄISCHE PATENTSCHRIFT

(11) **EP 2 963 752 B1**
(45) Veröffentlichungstag und Bekanntmachung des Hinweises auf die Patenterteilung: **05.06.2019**
(21) Anmeldenummer: 15160527.6
(22) Anmeldetag: 24.03.2015
(51) Int. Cl.: H02H 3/33, H02H 3/347

(54) **FEHLERSTROMSCHUTZVORRICHTUNG ZUR ABLEITSTROMERFASSUNG**
RESIDUAL CURRENT PROTECTION DEVICE FOR LEAKAGE CURRENT DETECTION
DISPOSITIF DE PROTECTION DIFFÉRENTIELLE DESTINÉ À LA DÉTECTION DE COURANT DE FUITE

(30) Priorität: 04.07.2014 DE 102014213055; 16.10.2014 DE 102014221042
(43) Veröffentlichungstag der Anmeldung: 06.01.2016
(73) Patentinhaber: Siemens Aktiengesellschaft, 80333 München (DE)
(72) Erfinder: Adlhoch, Manfred, 93170 Bernhardswald (DE)

(56) Entgegenhaltungen:
- EP-A2- 2 571 128
- WO-A1-03/100938
- US-A- 5 578 931

## Beschreibung

Die vorliegende Erfindung betrifft eine Fehlerstromschutzvorrichtung mit einem Gehäuse und einer Auswerteeinrichtung, die in das Gehäuse eingebaut ist. Darüber hinaus betrifft die vorliegende Erfindung ein Verfahren zum Betreiben einer solchen Fehlerstromschutzvorrichtung.

Fehlerstrom-(FI)Schutzvorrichtungen (auch Fehlerstromschutzschalter genannt) in Verbraucheranlagen dienen zum Personen- und Brandschutz. Fehlerstromschutzschalter gegen Erdfehlerströme bzw. technische Ableitströme, auch RCD (Residual Current Device) genannt, sind Schutzschaltgeräte, die den elektrischen Stromkreis überwachen, um elektrische Fehler (Installationsfehler bzw. Schutz bei direktem Berühren) in Installationen zu detektieren und abzuschalten.

Da unterschiedliche Fehlerströme (Gleichströme und Wechselströme aller Art) von Fehlerstromschutzschaltern erfasst werden sollen, unterscheidet man unterschiedliche Typen von Fehlerstromschutzschaltern. So dienen Fehlerstromschutzvorrichtungen vom Typ AC lediglich zur Erfassung von sinusförmigen Wechselfehlerströmen. Fehlerstromschutzvorrichtungen vom Typ A erfassen neben sinusförmigen Wechselfehlerströmen auch pulsierende Gleichfehlerströme. Darüber hinaus erfassen Fehlerstromschutzvorrichtungen vom Typ F zusätzlich Fehlerströme, die aus einem Frequenzgemisch von Frequenzen bis 1 kHZ bestehen. Schließlich dienen Fehlerstromschutzvorrichtungen vom Typ B neben der Erfassung der Fehlerstromformen des Typs F auch zur Erfassung von glatten Gleichfehlerströmen, d. h. sie sind allstromsensitiv. Die Erfassung von Gleichfehlerströmen erfordert in der Regel einen zusätzlichen Summenstromwandler und eine Elektronikeinheit, welche eine separate Stromversorgung benötigt. Daher sind Fehlerstromschutzschalter vom Typ B netzspannungsabhängig.

In Maschinen und Anlagen entstehen oft Ableitströme, welche nicht auf einem technischen Defekt beruhen. Diese werden erzeugt durch z. B. Netzfilter, Zwischenkreispuffern von Motor- und Frequenzumrichtern etc. Ein allstromsensitiver RCD (Typ B) sieht diese Fehler (Erdfehlerströme und technische Ableitströme) nur in Summe und kann sie nicht unterscheiden. Dementsprechend kann es zu Fehlauslösungen infolge technischer Ableitströme kommen. Folge davon ist oftmals, dass ein Anlagenbetreiber seine Maschinen sequentiell einschalten und gegebenenfalls auch in der Installation Maßnahmen vornehmen muss, um diesen Effekt der Fehlauslösungen zu vermeiden bzw. zu vermindern. Mancher Anlagenbetreiber umgeht sogar den Fehlerstromschutz, um Fehlauslösungen zu vermeiden, oder baut ein Gerät mit höherem Bemessungsfehlerstrom Idn ein und verliert damit seinen Personenschutz oder mehr. Zudem gibt es so genannte Ableitstromkompensationsgeräte zur Kompensation von Ableitströmen als Zusatzgerät in Verbindung mit einem FI Typ B.

Druckschrift WO 03/100938 A1, die den Oberbegriff des Anspruchs 1 bildet, offenbart eine Fehlerstromschutzvorrichtung mit einer Auswerteeinrichtung, wobei die Auswerteeinrichtung eine Transformationseinheit zum Ermitteln eines ersten Spektrums eines ersten Summenstroms in einem Netz, das sich in einem vorgegebenen ersten Zustand befindet, und zum Ermitteln eines zweiten Spektrums eines zweiten Summenstroms in dem Netz, das sich in einem zweiten Zustand befindet, aufweist, wobei die Auswerteeinrichtung eine Speichereinrichtung zum dauerhaften Speichern des ersten Spektrums aufweist, wobei die Auswerteeinrichtung eine Vergleichseinheit zum Vergleichen des ersten Spektrums mit dem zweiten Spektrum oder mit einem aus dem zweiten Spektrum gebildeten weiteren Spektrum aufweist, und wobei die Fehlerstromschutzvorrichtung eine Auslöseeinheit aufweist, die in Abhängigkeit von einem Ergebnis der Vergleichseinheit ausgelöst wird. Ferner offenbart die Druckschrift US 5 578 931 A ein System zur spektralen Lichtbogenanalyse. Ein Laststrom wird überwacht und analysiert, um Frequenzkomponenten zu erhalten. Der analysierte Strom wird daraufhin mit Modellspektrum eines Fehlerlichtbogens verglichen.

Die Aufgabe der vorliegenden Erfindung besteht darin, eine Fehlerstromschutzvorrichtung anzugeben, bei der die Gefahr von Fehlauslösungen reduziert werden kann. Darüber hinaus soll ein entsprechendes Verfahren zum Betreiben einer solchen Fehlerschutzvorrichtung angegeben werden.
- Erfindungsgemäß wird diese Aufgabe gelöst durch eine Fehlerstromschutzvorrichtung nach Anspruch 1.
- Darüber hinaus wird erfindungsgemäß bereitgestellt ein Verfahren nach Anspruch 9.

In vorteilhafter Weise wird also bei der erfindungsgemäßen Fehlerstromschutzvorrichtung bzw. bei den entsprechenden Verfahren das Spektrum eines aktuellen Summenstroms (aktueller/zweiter Zustand des Netzes) gebildet und mit einem abgespeicherten Spektrum eines zuvor erfassten Spektrums (zuvor erfasster/erster Zustand des Netzes) verglichen. Falls das Muster der Spektren gleich ist, kann die Fehlerstromschutzvorrichtung gegebenenfalls nicht ausgelöst werden, (d.h. ein gefundenes (Teil-)Muster entspricht z.B. einem bekannten technischen Ableitstrom im System mit der Folge, dass eine Auslösung verhindert werden soll). Somit kann dieses (Teil-)Muster aus dem Gesamtsignal(Spektrum) ausgeblendet werden, d.h es geht nicht in die Auslöseentscheidung mit ein. Damit ist es möglich, dass gewisse Zustände einer zu überwachenden Anlage im Vorfeld beispielsweise hinsichtlich Ableitströmen analysiert werden. Ein oder mehrere entsprechende Spektren können in der Speichereinrichtung der Fehlerstromschutzvorrichtung gespeichert werden. Hat dann das aktuell erfasste Spektrum das gleiche Muster wie das gespeicherte Spektrum oder ein aus dem gespeicherten Spektrum gebildetes weiteres Spektrum (z.B. Spektrum aus einer Mittelwertbildung), so kann davon ausgegangen werden, dass in einem gewissen Maß Ableitströme vorhanden sind. In diesem Fall kann die Fehlerstromschutzvorrichtung so eingestellt werden, dass sie nicht auslöst und damit keine Fehlauslösung produziert.

Vorzugsweise ist die Auswerteeinrichtung allstromsensitiv. Dies bedeutet, dass die Fehlerstromschutzvorrichtung nicht nur Wechselfehlerströme, sondern auch glatte Gleichfehlerströme erfassen kann. Damit kann insbesondere eine Fehlerstromschutzvorrichtung gemäß Typ B mit Eignung zur Ableitstromerfasssung bereitgestellt werden.

Die Auswerteeinrichtung kann ein Netzteil aufweisen und damit ein DI-Teil (Differenzstrom) zur Gleichstromerfassung bilden. Gleichzeitig kann unabhängig von dem DI-Teil ein netzteilunabhängiger FI-Teil zur Wechsel- und Pulsstromerfassung in dem Gehäuse der Fehlerstromschutzvorrichtung ausgebildet sein. Dies bedeutet, dass parallel zwei Teile, die unabhängig voneinander vorzugsweise die gleiche Auslöseeinheit ansteuern, vorgesehen sind, wobei der DI-Teil eben netzspannungsabhängig und der FI-Teil netzspannungsunabhängig ist.

Aus Redundanzgründen kann der DI-Teil auch zur Wechselstromerfassung ausgebildet sein. Dies hätte den Vorteil, dass zumindest in einem gewissen Frequenzbereich beide Teile die Auslöseeinheit auslösen können.

In einer weiteren Ausführungsform kann der DI-Teil digital und der FI-Teil analog ausgebildet sein. Der digitale Aufbau des DI-Teils hat den Vorteil höherer Genauigkeit und Flexibilität, wohingegen der analoge Aufbau des FI-Teils den Vorteil verminderten Bauraums und verminderten schaltungstechnischen Aufwands gerade bei höheren Frequenzen besitzt.

Darüber hinaus weist die Fehlerstromschutzvorrichtung eine Phasendetektionseinrichtung auf, mit der eine Phase eines Stroms in einer von mehreren vorgegebenen Stromleitungen des Netzes detektierbar ist, und die Auswerteeinrichtung ist dazu ausgebildet, anhand der Phase das Ergebnis der Vergleichseinheit einer der Stromleitungen zuzuordnen. Gerade bei einem mehrphasigen Netz ist es notwendig, den Fehlerstrom bzw. Ableitstrom einer der Phasen des Netzes zuordnen zu können. Um dies zu ermöglichen, wird eine Phasendetektionseinrichtung vorgesehen, welche die Phase zumindest einer der Phasenleitungen des Netzes ermittelt. Aufgrund der festen Phasenbeziehung kann dann jederzeit die Phase in allen Phasenleitungen bestimmt werden. Wird dann auch in dem Summenstrom, der durch die Fehlerstromschutzvorrichtung erfasst wird, eine entsprechende Phase detektiert, so kann eine Stromkomponente des Summenstroms eine der Phasenleitungen zugeordnet werden.

Besonders vorteilhaft ist außerdem, wenn die Transformationseinheit zur Ausbildung des jeweiligen Spektrums mittels Fourier-Transformation ausgestaltet ist. Dadurch kann aus dem Zeitsignal eines Summenstroms auf übliche Weise ein Frequenzspektrum zur Weiterverarbeitung gewonnen werden. Insbesondere kann die Transformation durch FFT oder DFT erfolgen.

Speziell kann die Auswerteeinheit auch eine Lerneinheit aufweisen, mit der das Ermitteln und Speichern des ersten Spektrums initiierbar und steuerbar ist. Dies bedeutet, dass die Fehlerstromschutzvorrichtung eine Lern- bzw. Teach-Funktion besitzt. Damit ist es möglich, die Fehlerstromschutzvorrichtung auf einfache Weise an eine spezifische Anlage individuell anzupassen. Im Rahmen des Lernens bzw. Lehrens kann so der Fehlerstromschutzvorrichtung "beigebracht" werden, welche Ableitströme unkritisch sind und nicht zu einer Auslösung der Fehlerstromschutzvorrichtung führen sollen. Die Lerneinheit weist dann beispielsweise ein manuelles Bedienelement oder einen Signaleingang auf, mittels dem dann der Lernvorgang direkt oder indirekt auslösbar ist. Das Netz bzw. die Anlage wird für das Lernen bzw. Lehren in einen definierten Betriebszustand gebracht, und das Spektrum des dabei auftretenden Summenstroms wird gelernt. Gegebenenfalls wird dies für mehrere Betriebszustände wiederholt, sodass in einem Musterpuffer eines oder mehrere spektrale Muster in der Fehlerstromschutzvorrichtung hinterlegt werden. Erst nach dem Lernen kann der eigentliche Überwachungsbetrieb der Fehlerstromschutzvorrichtung erfolgen.

In einer weiteren Ausführungsform kann die Fehlerstromschutzvorrichtung eine Schnittstelleneinheit aufweisen, mit der das Ergebnis des Vergleichs aus dem Gehäuse nach außen übertragbar ist. Hierdurch kann die Möglichkeit geschaffen werden, das Vergleichsergebnis für eine Weiterverarbeitung für externe Geräte zur Verfügung zu stellen. Eine solche Schnittstelleneinheit kann eine Kabelbuchse aufweisen oder zur drahtlosen Übertragung ausgebildet sein. Außerdem kann sie auch eine einfache LED aufweisen, mit der das Vergleichsergebnis optisch nach außen übermittelt wird.

Die oben dargestellten Merkmale dienen gleichermaßen zur Weiterbildung der erfindungsgemäßen Fehlerstromschutzvorrichtung als auch zur Weiterbildung des erfindungsgemäßen Verfahrens.

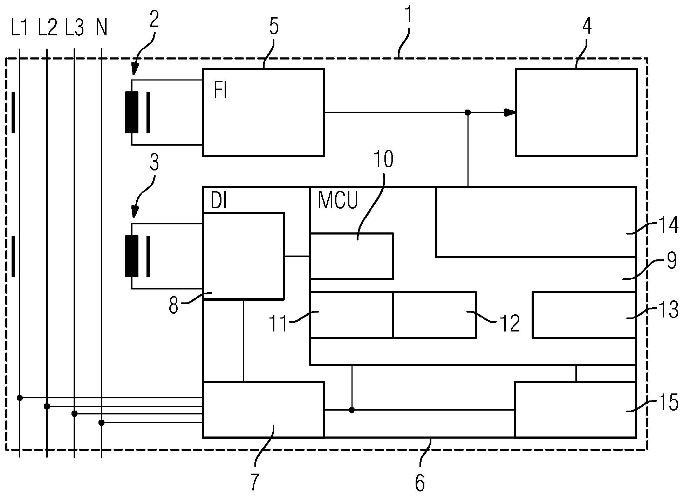

Die vorliegende Erfindung wird nun anhand der beigefügten Zeichnung näher erläutert, die ein Prinzipschaltbild einer Fehlerstromschutzvorrichtung gemäß der vorliegenden Erfindung wiedergibt.

Die nachfolgend näher geschilderten Ausführungsbeispiele stellen bevorzugte Ausführungsformen der vorliegenden Erfindung dar. Die dabei geschilderten Merkmale können nicht nur in der jeweils genannten Kombination, sondern auch in anderen Kombinationen oder in Alleinstellung verwendet werden, sofern nichts anderes angegeben ist. Die Merkmale sind jeweils im Zusammenhang mit der geschilderten Vorrichtung, und wenn technisch sinnvoll und möglich auch als funktionelles Merkmal eines Verfahrens zu sehen.

Als Anwendungsbeispiel könnte die Erfassung betriebsbedingter Ableitströme direkt in einem vorzugsweise allstromsensitiven FI-Schutzschalter (allgemein Fehlerstromschutzvorrichtung bzw. RCD) mit beispielsweise einem Bemessungsfehlerstrom ab 30 mA gesehen werden. Es sollte ein sicherer Personen- und Brandschutz durch eine klare Differenzierung zwischen Ableitstrom und Fehlerstrom gewährleistet werden.

Der erfindungsgemäße Ansatz besteht darin, beispielsweise einen allstromsensitiven Fehlerstromschutzschalter (FI Typ B) um eine Zusatzfunktion, nämlich das Ermitteln beispielsweise eines Ableitstroms, zu erweitern.

Ein exemplarisches Schaltbild eines solchen Fehlerstromschutzschalters ist in der Figur dargestellt. Die dort abgebildete Schaltung ist in ein Gehäuse 1 des Fehlerstromschutzschalters integriert bzw. eingebaut. Das Gehäuse 1 besitzt Anschlussstellen hier für ein Dreiphasensystem mit den Phasenleitungen L1, L2 und L3 sowie die Nullleitung N. Für eine andere Phasenzahl können entsprechend andere Anschlüsse vorgesehen sein.

Der Fehlerstromschutzschalter besitzt hier einen ersten Summenstromwandler 2 und einen zweiten Summenstromwandler 3. Jeder davon erfasst die Summe aller Ströme, die in Leitungsadern (Primärwicklung) durch den jeweiligen Wandlerkern fließen. Im vorliegenden Beispiel führen die Leitungen L1, L2, L3 und N durch die beiden Wandlerkerne. Im Normalfall addieren sich sämtliche Ströme der Leitungen zu Null, so dass der Fehlerstromschutzschalter nicht ausgelöst wird, d. h. sein Auslöseschalter 4 geschlossen bleibt. Der Auslöseschalter 4 unterbricht dann die Stromleitungen L1, L2, L3 und N, was in der Figur nicht näher dargestellt ist.

Die beiden Summenstromwandler 2 und 3 liefern jeweils ein Summenstromsignal. An den ersten Summenstromwandler 2 ist ein FI-Teil 5 angeschlossen, dass hier eine Komponente einer Auswerteeinrichtung darstellt. Der FI-Teil 5 erfasst Wechselstromkomponenten eines von Null verschiedenen Summenstroms. Dabei erfolgt eine Analyse in einem bestimmten Frequenzbereich. Der FI-Teil 5 steuert den Auslöseschalter 4, vorzugsweise ein Relais, an. Sind ausreichend Wechselstromkomponenten in dem Summenstromsignal, so wird der Auslöseschalter 4 ausgelöst, d. h. die Leitungen L1, L2, L3 und N werden unterbrochen.

An den zweiten Summenstromwandler 3 ist ein DI-Teil 6 angeschlossen. Dies ist ebenfalls Teil der Auswerteeinrichtung. Mit dem DI-Teil 6 sollen insbesondere Gleichstromanteile in dem Summenstromsignal erkannt werden können. Darüber hinaus können damit auch gegebenenfalls Wechselstromkomponenten in dem Summenstromsignal erkannt werden. Für eine Gleichstromerfassung benötigt der DI-Teil 6 ein Netzteil 7, wie dies von allstromsensitiven FI-Schaltern vom Typ B bekannt ist. Die Fehlerstromschutzvorrichtung ist damit netzspannungsabhängig und bezieht seine notwendige Energie von den überwachten Leitungen L1, L2, L3 und N. Optional werden zur Energieversorgung auch weniger Phasenleitungen verwendet. Innerhalb des DI-Teils 6 versorgt das Netzteil alle Komponenten, sofern nötig.

Am Signaleingang zur Aufnahme des Summenstromssignals vom zweiten Summenstromwandler 3 befindet sich eine Filter- und Verstärkerschaltung 8. Diese bereitet das Summenstromsignal für die weitere Verarbeitung auf. Diese weitere Verarbeitung erfolgt vorzugsweise digital durch einen Mikrocontroller 9. Auch die Filter- und Verstärkerschaltung 8 kann digital ausgeführt sein und gegebenenfalls einen AD-Wandler aufweisen. Ferner können auch alle anderen Komponenten des DI-Teils 6 digital aufgebaut sein.

Der Mikrocontroller 9 besitzt beispielsweise eine Abtasteinheit 10, welche das Signal der Filter- und Verstärkerschaltung 8 zunächst abtastet, um ein für die weitere Verarbeitung geeignetes digitales Signal zu erhalten. Dieses abgetastete Signal wird einer Transformationseinheit 11 zugeführt, die das Frequenzspektrum des abgetasteten Signals bildet. Vorzugsweise erfolgt die Transformation durch Fourier-Transformation, z. B. durch FFT oder DFT. Das gewonnene Spektrum wird nun dauerhaft abgespeichert oder vorübergehend zwischengespeichert. Hierfür dient eine Speichereinrichtung 12.

Das DI-Teil 6 umfasst außerdem eine Lerneinheit 13. Diese ermöglicht ein Lernen von Summenstromspektren vor der eigentlichen Überwachungsphase durch die Fehlerstromschutzvorrichtung. Eine solche Lernphase wird manuell oder ggf. auch mittels eines Signals elektrisch ausgelöst. Während einer Lernphase befindet sich ein Netz (Leitungen L1, L2, L3 und N) oder eine Anlage in einem bestimmten Betriebszustand (erster Zustand). In einem solchen Betriebszustand fließen ggf. bestimmte betriebsbedingte Ableitströme. Solche Ableitströme sollen nicht zum Auslösen der Fehlerstromschutzvorrichtung und damit zum Stillstand der Anlage führen. Daher wird das spektrale Muster des Summenstroms in diesen Betriebszustand gelernt. Das jeweilige Spektrum bzw. spektrale Muster wird dazu in der Speichereinrichtung dauerhaft abgespeichert, zumindest solange bis das aufgezeichnete Spektrum bewusst gelöscht oder überschrieben wird.

In der Regel nimmt eine Anlage unterschiedliche Betriebszustände (erste Zustände) ein, in denen auch entsprechend unterschiedliche Ableitströme vorliegen. Dementsprechend sollte die Speichereinrichtung 12 in der Lage sein, nicht nur ein Spektrum, sondern ggf. mehrere Spektren zu speichern.

Während der Überwachungsphase wird dann zum aktuellen Zeitpunkt ein Spektrum des Summenstroms für den aktuellen Betriebszustand des Netzes oder der Anlage (zweiter Zustand) gewonnen und ebenfalls in der Speichereinrichtung 12 zwischengespeichert. Für die Zwischenspeicherung ist beispielsweise ein Ringpuffer geeignet. Eine Vergleichseinheit 14, die ebenfalls integraler Bestandteil des Mikrocontrollers 9 ist, vergleicht nun das aktuelle Spektrum, das in der Speichereinrichtung 12 zwischengespeichert ist mit den vorab, dauerhaft abgespeicherten Spektren in der Speichereinrichtung 12. Ggf. führt die Vergleichseinheit 14 neben einen einfachen Vergleich auch weiterführende Operationen durch, um zu entscheiden, ob das aktuelle Spektrum einem der im Vorfeld registrierten Spektren entspricht. Ggf. erfolgen dabei beispielsweise eine Mittelwertbildung oder andere Statistikoperationen.

Entspricht das aktuelle Spektrum einem der im Vorfeld aufgenommenen Spektren, so ist davon auszugehen, dass der aktuelle Betriebszustand der Anlage demjenigen Betriebszustand entspricht, der gelernt wurde. In der Regel wird der gelernte Zustand ein "Normalzustand" sein, und der Fehlerstromschutzschalter wird dann nicht auslösen, wenn das aktuelle Spektralmuster dem Muster eines solchen dauerhaft abgespeicherten Spektrums entspricht. Andernfalls, wenn das Spektrum des aktuellen Betriebszustands von dem oder den abgespeicherten Mustern bzw. deren Mittelwert abweicht, stellt dies die Vergleichseinheit 14 fest und liefert ein entsprechendes Auslösesignal an den Auslöseschalter 4.

Die Auswerteeinrichtung kann darüber hinaus eine Schnittstelle 15 aufweisen, mit der Daten bzw. Informationen nach außen geleitet werden. Auch kann eine solche Schnittstelle 15 dazu verwendet werden, in die Speichereinrichtung 12 Daten einzulesen oder von ihr auszulesen. Bei der Schnittstelle 15 kann es sich beispielsweise um einen Kabelanschluss, eine kabellose Kommunikationsschnittstelle (z. B. WLAN oder Bluetooth) oder auch um eine einfache LED zur Statusanzeige handeln.

Ein (allstromsensitiver) Fehlerstromschutzschalter (FI Typ B) wurde hier also um eine Zusatzfunktion erweitert, gemäß der Fehler- bzw. Ableitströme sicherer nachgewiesen werden können. Der Nachweis erfolgt im Frequenzbereich nach einer Fourier-Transformation (z. B. FFT, DFT) nach Abtastung der Messpunkte parallel zu bestehenden Auswerteroutinen.

Bei Identifizierung eines Ableitstrom-Musters in dem aktuellen Spektrum des Summenstroms kann über die Schnittstelle eine entsprechende Identifizierungsinformation nach außen gegeben werden.

Optional weist die Fehlerstromschutzvorrichtung zusätzlich einen Sensor für eine Phasendetektion auf, womit die Spannungen in den Phasenleitungen L1, L2 und L3 hinsichtlich ihrer Phase überprüft werden. Prinzipiell genügt es, die Phase in einer dieser Leitungen festzustellen. Die übrigen Phasen ergeben sich durch die feste Phasenbeziehung in einem Mehr-, insbesondere einem Dreiphasensystem. Wird nun auch in dem Summenstromsignal die Phase ausgewertet, und diese entspricht einer Phase aus den Phasenleitungen, so kann ein Fehler- oder Ableitstrom der entsprechenden Phasenleitung zugeordnet werden.

Nachfolgend wird die Funktionsweise der erfindungsgemäßen Fehlerstromschutzvorrichtung bzw. das entsprechende Betriebsverfahren näher dargestellt. Bei Inbetriebnahme werden die in der Installation vorkommenden technischen Ableitströme durch Aufzeichnung in einem Ringpuffer gespeichert. Diese Daten werden anschließend manuell am PC ausgewertet und dabei die technischen Ableitströme identifiziert. Diese Fehlerbilder werden dann per Teachvorgang bzw. manuelle Speicherung in den Kompensationsspeicher (Speichereinrichtung 12) der Fehlerstromschutzvorrichtung geladen. Wird im Betrieb die Fehlerstromgrenze Idn überschritten, so wird ein Quervergleich mit den gespeicherten spektralen Mustern vorgenommen. Ein Auslösen der Fehlerstromschutzvorrichtung erfolgt nur dann, wenn es sich nicht um einen anlagentypischen Ableitstrom handelt.

Die erfindungsgemäße Fehlerstromschutzvorrichtung erlaubt also eine sichere Erkennung und Unterscheidung von Fehlerströmen und Ableitströmen. Diese beiden Funktionen sind in einem einzigen Gerät implementiert. Dadurch werden Fehlauslösungen bei gleichzeitiger Sicherstellung des Personenschutzes vermieden.

Die geschilderte Fehlerstromschutzvorrichtung besitzt also nicht nur die übliche Funktionalität der reinen Fehlerstromerfassung, sondern auch die Zusatzfunktionalität zur Diagnose in Installationen und ggf. auch die Funktion der Anzeige bzw. Ausgabe von Prozessdaten über eine Schnittstelle am Gerät. Dabei kann das DI-Teil ausschließlich zur Verarbeitung über die Fourier-Transformation, aber auch im Hinblick auf eine Redundanzfunktionalität als zusätzliche Auswertemethode parallel zu einem herkömmlichen FI Typ B ausgeführt sein.

### Bezugszeichenliste

- 1: Gehäuse
- 2: Summenstromwandler
- 3: Summenstromwandler
- 4: Auslöseschalter
- 5: FI-Teil
- 6: DI-Teil
- 7: Netzteil
- 8: Verstärkerschaltung
- 9: Mikrocontroller
- 10: Abtasteinheit
- 11: Transformationseinheit
- 12: Speichereinrichtung
- 13: Lerneinheit
- 14: Vergleichseinheit
- 15: Schnittstelle
- L1, L2, L3, N: Leitungen

## Patentansprüche

1. Fehlerstromschutzvorrichtung mit
- einem Gehäuse (1) und
- einer Auswerteeinrichtung, die in das Gehäuse (1) eingebaut ist, wobei
- die Auswerteeinrichtung eine Transformationseinheit (11) zum Ermitteln eines ersten Spektrums eines ersten Summenstroms in einem Netz, das sich in einem vorgegebenen ersten Zustand befindet, und zum Ermitteln eines zweiten Spektrums eines zweiten Summenstroms in dem Netz, das sich in einem zweiten Zustand befindet, aufweist,
- die Auswerteeinrichtung eine Speichereinrichtung (12) zum dauerhaften Speichern des ersten Spektrums aufweist,
- die Auswerteeinrichtung eine Vergleichseinheit (14) zum Vergleichen des ersten Spektrums mit dem zweiten Spektrum oder mit einem aus dem zweiten Spektrum gebildeten weiteren Spektrum aufweist und
- die Fehlerstromschutzvorrichtung eine Auslöseeinheit (4) in dem Gehäuse (1) aufweist, die in Abhängigkeit von einem Ergebnis der Vergleichseinheit (14) ausgelöst wird, und wobei
- die Fehlerstromschutzvorrichtung eine Phasendetektionseinrichtung aufweist, mit der eine Phase eines Stroms in einer von mehreren vorgegebenen Stromleitungen (L1, L2, L3, N) des Netzes detektierbar ist, und die Auswerteeinrichtung dazu ausgebildet ist, anhand der Phase das Ergebnis der Vergleichseinheit (14) einer der Stromleitungen (L1, L2, L3, N) zuzuordnen.

2. Fehlerstromschutzvorrichtung nach Anspruch 1, wobei die Auswerteeinrichtung gleichstromsensitiv und wechselstromsensitiv ist.

3. Fehlerstromschutzvorrichtung nach Anspruch 1, wobei die Auswerteeinrichtung ein
Netzteil aufweist und ein DI-Teil (6) zur Gleichstromerfassung bildet, und unabhängig von dem DI-Teil (6) ein netzspannungsunabhängiger FI-Teil (5) zur Wechselstromerfassung in dem Gehäuse (1) ausgebildet ist.

4. Fehlerstromschutzvorrichtung nach Anspruch 3, wobei der DI-Teil (6) auch zur Wechselstromerfassung ausgebildet ist.

5. Fehlerstromschutzvorrichtung nach Anspruch 3 oder 4, wobei der DI-Teil (6) digital und der FI-Teil (5) analog ausgebildet ist.

6. Fehlerstromschutzvorrichtung nach einem der vorhergehenden Ansprüche, wobei die Transformationseinheit (11) zur Ausbildung des jeweiligen Spektrums mittels Fouriertransformation ausgebildet ist.

7. Fehlerstromschutzvorrichtung nach einem der vorhergehenden Ansprüche, wobei die Auswerteeinrichtung eine Lerneinheit aufweist, mit der das Ermitteln und Speichern des ersten Spektrums initiierbar und steuerbar ist.

8. Fehlerstromschutzvorrichtung nach einem der vorhergehenden Ansprüche, die eine Schnittstelleneinheit (15) aufweist, mit der das Ergebnis des Vergleichs aus dem Gehäuse (1) nach außen übertragbar ist.

9. Verfahren zum Betreiben einer Fehlerstromschutzvorrichtung durch
- Ermitteln eines ersten Spektrums eines ersten Summenstroms in einem Netz, das sich in einem vorgegebenen ersten Zustand befindet, durch die Fehlerstromschutzvorrichtung,
- Speichern des ersten Spektrums in der Fehlerstromschutzvorrichtung zumindest solange, bis die nachfolgenden Schritte mehrfach durchgeführt sind,
- Ermitteln eines zweiten Spektrums eines zweiten Summenstroms in dem Netz, das sich in einem zweiten Zustand befindet, durch die Fehlerstromschutzvorrichtung,
- Vergleichen des ersten Spektrums mit dem zweiten Spektrum oder mit einem aus dem zweiten Spektrum gebildeten weiteren Spektrum in der Fehlerstromschutzvorrichtung und
- Auslösen der Fehlerstromschutzvorrichtung in Abhängigkeit von einem Ergebnis des Vergleichens, wobei
- eine Phase eines Stroms in einer von mehreren vorgegebenen Stromleitungen (L1, L2, L3, N) des Netzes detektiert wird, und anhand der Phase das Ergebnis des Vergleichens einer der Stromleitungen (L1, L2, L3, N) zugeordnet wird.

## Claims

1. Residual current protection apparatus comprising
- a housing (1) and
- an evaluation device, which is built into the housing (1), wherein
- the evaluation device has a transformation unit (11) for identifying a first spectrum of a first summation current in a network, which is in a prescribed first state, and for identifying a second spectrum of a second summation current in the network, which is in a second state,
- the evaluation device has a storage device (12) for permanently storing the first spectrum,
- the evaluation device has a comparison unit (14) for comparing the first spectrum with the second spectrum or with a further spectrum formed from the second spectrum and
- the residual current protection apparatus has a trip unit (4) in the housing (1), said trip unit being tripped depending on a result of the comparison unit (14), and wherein
- the residual current protection apparatus has a phase detection device, which can be used to detect a phase of a current in one of a plurality of prescribed power lines (L1, L2, L3, N) of the network, and the evaluation device is designed to assign the result of the comparison unit (14) to one of the power lines (L1, L2, L3, N) based on the phase.

2. Residual current protection apparatus according to Claim 1, wherein the evaluation device is DC-sensitive and AC-sensitive.

3. Residual current protection apparatus according to Claim 1, wherein the evaluation device has a power supply unit and forms a DI part (6) for DC detection, and, independently of the DI part (6), a network-voltage-independent FI part (5) is configured for AC detection in the housing (1).

4. Residual current protection apparatus according to Claim 3, wherein the DI part (6) is also configured for AC detection.

5. Residual current protection apparatus according to Claim 3 or 4, wherein the DI part (6) is of digital design and the FI part (5) is of analogue design.

6. Residual current protection apparatus according to one of the preceding claims, wherein the transformation unit (11) is designed to form the respective spectrum by means of Fourier transformation.

7. Residual current protection apparatus according to one of the preceding claims, wherein the evaluation device has a learning unit, which can be used to initiate and control the identification and storage of the first spectrum.

8. Residual current protection apparatus according to one of the preceding claims, which has an interface unit (15), which can be used to transmit the result of the comparison from the housing (1) to the outside.

9. Method for operating a residual current protection apparatus by
- identifying a first spectrum of a first summation current in a network, which is in a prescribed first state, through the residual current protection apparatus,
- storing the first spectrum in the residual current protection apparatus at least until the subsequent steps are carried out several times,
- identifying a second spectrum of a second summation current in the network, which is in a second state, through the residual current protection apparatus,
- comparing the first spectrum with the second spectrum or with a further spectrum formed from the second spectrum in the residual current protection apparatus and
- tripping the residual current protection apparatus depending on a result of the comparison, wherein
- a phase of a current in one of a plurality of prescribed power lines (L1, L2, L3, N) of the network is detected, and the result of the comparison is assigned to one of the power lines (L1, L2, L3, N) based on the phase.

## Revendications

1. Dispositif de protection à courant différentiel comprenant :
- un boîtier (1) et
- un moyen d'évaluation intégré dans le boîtier (1), dans lequel
- le moyen d'évaluation comprend une unité de transformation (11) destinée à déterminer un premier spectre d'un premier courant cumulé dans un réseau, qui se trouve dans un premier état prédéterminé et à déterminer un second spectre d'un second courant cumulé dans le réseau, qui se trouve dans un second état,
- le moyen d'évaluation comprend un moyen de mémoire (12) destiné à stocker de façon permanente le premier spectre,
- le moyen d'évaluation comprend une unité de comparaison (14) destinée à comparer le premier spectre avec le second spectre ou avec un autre spectre formé à partir du second spectre, et
- le dispositif de protection à courant différentiel comprend une unité de déclenchement (4) dans le boîtier (1) qui est déclenchée en fonction d'un résultat de l'unité de comparaison (14), et dans lequel
- le dispositif de protection à courant différentiel comprend un moyen de détection de phase, au moyen duquel une phase du courant dans une de plusieurs lignes électriques (L1, L2, L3, N) définies du réseau peut être détectée et le moyen d'évaluation est configuré de manière à affecter le résultat de l'unité de comparaison (14) à l'une des lignes électriques (L1, L2, L3, N) en se basant sur la phase.

2. Dispositif de protection à courant différentiel selon la revendication 1, dans lequel le moyen d'évaluation est sensible au courant continu et sensible au courant alternatif.

3. Dispositif de protection à courant différentiel selon la revendication 1, dans lequel le moyen d'évaluation comprend une alimentation secteur et forme une partie DI (6) destinée à détecter le courant continu, et indépendamment de la partie DI (6), une partie FI (5) indépendante de la tension du réseau destinée à détecter le courant alternatif est formée dans le boîtier (1).

4. Dispositif de protection à courant différentiel selon la revendication 3, dans lequel la partie DI (6) est configurée pour détecter en outre le courant alternatif.

5. Dispositif de protection à courant différentiel selon la revendication 3 ou 4, dans lequel la partie DI (6) est configurée de manière numérique et la partie FI (5) est configurée de manière analogique.

6. Dispositif de protection à courant différentiel selon l'une des revendications précédentes, dans lequel l'unité de transformation (11) est configurée pour former le spectre respectif au moyen d'une transformation de Fourier.

7. Dispositif de protection à courant différentiel selon l'une des revendications précédentes, dans lequel l'unité d'évaluation comprend une unité d'apprentissage avec laquelle la détermination et le stockage du premier spectre peuvent être initiés et commandés.

8. Dispositif de protection à courant différentiel selon l'une des revendications précédentes, qui comprend une unité d'interface (15) avec laquelle le résultat de la comparaison peut être transmis vers l'extérieur depuis le boîtier (1).

9. Procédé pour faire fonctionner un dispositif de protection à courant différentiel par
- détermination, par le dispositif de protection à courant différentiel, d'un premier spectre d'un premier courant cumulé dans un réseau, qui se trouve dans un premier état prédéterminé,
- stockage du premier spectre dans le dispositif de protection à courant différentiel au moins jusqu'à ce que les étapes suivantes soient exécutées plusieurs fois,
- détermination, par le dispositif de protection à courant différentiel, d'un second spectre d'un second courant cumulé dans le réseau, qui se trouve dans un second état,
- comparaison du premier spectre avec le second spectre ou avec un autre spectre formé à partir du second spectre dans le dispositif de protection à courant différentiel, et
- déclenchement du dispositif de protection à courant différentiel en fonction du résultat de la comparaison, dans lequel
- une phase du courant dans une des plusieurs lignes électriques (L1, L2, L3, N) définies du réseau est détectée et, en se basant sur la phase, le résultat de la comparaison est affecté à une des lignes électriques (L1, L2, L3, N).
